# EUROPEAN PATENT SPECIFICATION

(11) **EP 0 462 746 B1**
(45) Date of publication and mention of the grant of the patent: **11.11.1998**
(21) Application number: 91305277.5
(22) Date of filing: 11.06.1991
(51) Int. Cl.: H04N 9/79, H04N 9/83

(54) **Automatic reproducing system of a VCR**
Automatisches Wiedergabesystem eines Videokassettenrecorders
Système de reproduction automatique d'un magnétoscope

(30) Priority: 21.06.1990 KR 879890
(43) Date of publication of application: 27.12.1991
(73) Proprietor: GOLD STAR CO. LTD, Seoul (KR)
(72) Inventor: Kim, Jung Rae, Myungjoo-ku, Kangwan-do (KR)
(74) Representative: Carmichael, David Andrew Halliday

(56) References cited:
- EP-A- 0 162 443
- EP-A- 0 311 442
- FR-A- 2 471 712
- GB-A- 2 114 849
- US-A- 4 760 470
- GRUNDIG TECHNISCHE INFORMATIONEN. no. 3, 30 March 1984, FURTH DE pages 144 - 150; G.REIME: 'Der Chromabaustein der neuen VHS-Recorder'
- PATENT ABSTRACTS OF JAPAN vol. 4, no. 170 (E-35)22 November 1980 & JP-A-55 117 390 ( MITSUBISHI ELECTRIC CORP ) 9 September 1980
- PATENT ABSTRACTS OF JAPAN vol. 7, no. 194 (E-195)24 August 1983 & JP-A-58 096 483 ( MATSUSHITA DENKI SANGYO KK ) 8 June 1983
- PATENT ABSTRACTS OF JAPAN vol. 10, no. 201 (E-419)15 July 1986 & JP-A-61 043 088 ( MITSUBISHI ELECTRIC CORP ) 1 March 1986
- IEEE TRANSACTIONS ON CONSUMER ELECTRONICS. vol. 32, no. 3, 30 August 1986, NEW YORK US pages 398 - 403; A.LENTZER ET AL: 'A Multistandard Chip Set for VHS VTR's'
- IEEE TRANSACTIONS ON CONSUMER ELECTRONICS. vol. 30, no. 3, 30 August 1984, NEW YORK US pages 382 - 389; K.H.REHFELDT: 'A Multistandard Chip Set for VHS VCRS'

## Description

### BACKGROUND OF THE INVENTION

The present invention relates to an automatic reproducing system for a VCR(Video Cassette Recorder), particularly to a system to discriminate modes of signal recorded in tape among PAL mode, MESECAM mode and SECAM mode and to reproduce a color signal corresponding to the descriminated mode.

In a reproducing system of a VCR of the prior art, a designated select switch is established in the external of the system and a color signal corresponding to the record mode is reproduced according to being switched manually said select switch by user.

That is, the user recognizes the record mode of signal recorded in tape and switches a select switch to reproduce appropriately a signal recorded in tape according to the record mode.

Because a reproducing system of a VCR of the prior art constituted only to select either PAL mode or MESECAM mode or only to select either PAL mode or SECAM mode by use of said mode select switch, it cannot automatically select one of PAL mode, SECAM mode and MESECAM mode according to the record mode of signal recorded in tape.

Accordingly,in the case where a reproducing system can not discriminate the record mode recorded in tape, the stable color signal can not be obtained.

Furthermore, even though the record mode recorded in tape is one of two mode which can be descriminated by a reproducing system, it is inconvenient that the user selects the corresponding mode terminal by adjusting the select switch manually.

GB-A-2 114 849 discloses a video reproducing apparatus adapted for reproducing a television signal which may exist in two or more standard formats, e.g. PAL or NTSC. The choice of format is selected by manual operation of switches. A suggestion is included that the choice might be made automatically but no enabling disclosure is made as to how the automatic detection and selection could be performed.

### SUMMARY OF THE INVENTION

It is an object of the invention to provide an automatic reproducing system which can discriminate the format mode of video signals recoded on tape and reproduce them as a color signal corresponding to the format in which they were recorded.

According to the present invention there is provided an automatic reproducing system for a VCR as defined in claim 1. It comprises a luminance signal detecting means for detecting a luminance signal from the signal recorded in VCR tape being inputted through a VCR head; comprising a first filtering part for passing only the frequency component corresponding to a color signal from the signal recorded in said VCR tape, a first adding part for adding the output signals of said luminance signal detecting means and color signals corresponding to PAL mode, MESECAM mode or SECAM to output as a composite video signal; characterised in that it further comprises a color signal generating means for inputting the output signal of said first filtering part and generating colour signals corresponding to PAL mode, MESECAM mode and SECAM mode by making use of the inputted signal; a reference signal generating means for inputting a color signal corresponding to MESECAM mode from said color signal generating means and generating a designated reference signal by the external control signal by making use of a color signal; a comparison signal generating means for inputting the output signal of said first filtering part, generating respective comparison signals corresponding to MESECAM mode and SECAM mode and outputting said comparison signals; a comparing means for generating signals discriminating mode of a color signal recorded in VCR tape as the external control signal by respectively comparing the output signal of said reference signal generating means and the output signals of said comparing signal generating means; a first switching part for selecting and outputting one of color signals corresponding to PAL mode, MESECAM mode and SECAM mode outputted from said color signal generating means by the output signal of said comparing means; a first switching part for selecting and outputting one of color signals corresponding to PAL mode, MESECAM mode and SECAM mode outputted from said color signal generating means by the output signal of said comparing means; a first adding part for adding the output signals of said luminance signal detecting means and said first switching part to output the composite video signal; and a control signal generating means for generating the external control signal required to said means by making use of a synchronizing signal detected from the output signal of said luminance signal detecting means, a head switching signal and output signals of said comparing means.

### BRIEF DESCRIPTION OF THE DRAWINGS

In order that the invention may be clearly understood it will now be described with reference to the accomanying drawings in which:

Fig. 1 is a schematic block diagram of a reproducing system of a VCR according to the present invention.

Fig. 2 is a detailed block diagram of Fig. 1 illustrating one preferred embodiment of the present invention.

Fig. 3 is a frequency spectrum of a color signal corresponding to each mode in the case where mode of a color signal recorded in VCR tape is PAL mode and SECAM mode respectively.

Fig. 4 is a frequency spectrum of a color signal corresponding to each mode in the case where mode of a color signal recorded in VCR tape is PAL mode, MESECAM mode and SECAM mode respectively.

### DETAILED DESCRIPTION OF THE PREFERRED EMBODIMENT

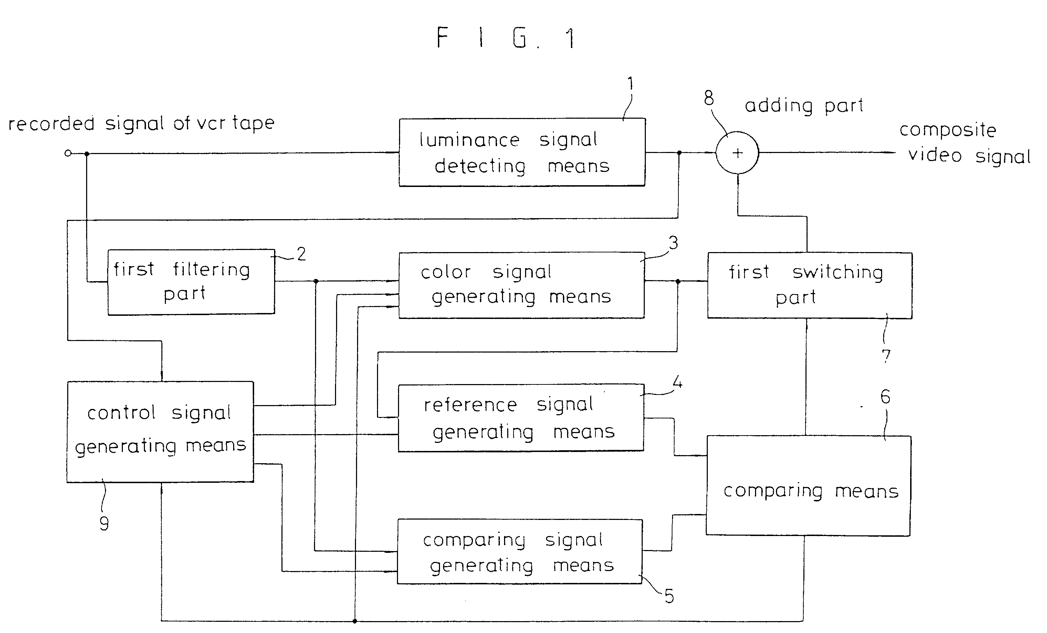

One embodiment of the invention will be described with reference to the accompanying Fig. 1 through Fig. 4 hereinafter.

Fig. 1 is a schematic configuration according to the present invention and the reproducing system of a VCR comprises the luminance signal detecting means 1 for inputting the signal recorded in VCR tape and detecting the luminance signal from said inputted signal, the first filtering part 2 for filtering only the frequency signal corresponding to a color signal component from the signal recorded in said VCR tape, the color signal generating means 3 for inputting the output signal of said first filtering part 2 (In embodiment, use a low pass filter for 1.4 MHz) and outputting respective color signals corresponding to PAL mode, MESECAM mode and SECAM mode by the external control signal by making use of the output signal of the first filtering part 2, the reference signal generating means 4 for inputting a signal corresponding to MESECAM mode among the output signals of said color signal generating means 3 and generating the designated reference signal by the external control signal by making use of a color signal if the color burst signal exists the comparing signal generating means 5 for inputting the output signal of said first filtering part 2, generating respective comparing signals corresponding to MESECAM mode and SECAM mode by the external control signal by making use of the inputted signal if the color burst signal exists and outputting said comparing signals, the comparing means 6 for inputting the output signal of said reference signal generating means 4 and the output signals of said comparing signal generating means 5 and outputting the mode discriminating signals, which discriminate mode of signal recorded in VCR tape by comparing said signals each other, the first switching part 7 for inputting color signals corresponding to PAL mode, MESECAM mode and SECAM mode from said color signal generating means 3 and selecting and outputting one of them by the output signal of said comparing means 6, the adding part 8 for inputting the output signal of said luminance signal generating means 1 and the output signal of said first switching part 7 and adding two signals to output as a composite video sisnal and the control signal generating means 9 for generating the external control signal required to said means by making use of said synchronizing signal detected from the output signal of said luminance signal detecting means 1, the head switching signal and the output signal of said comparing means 6.

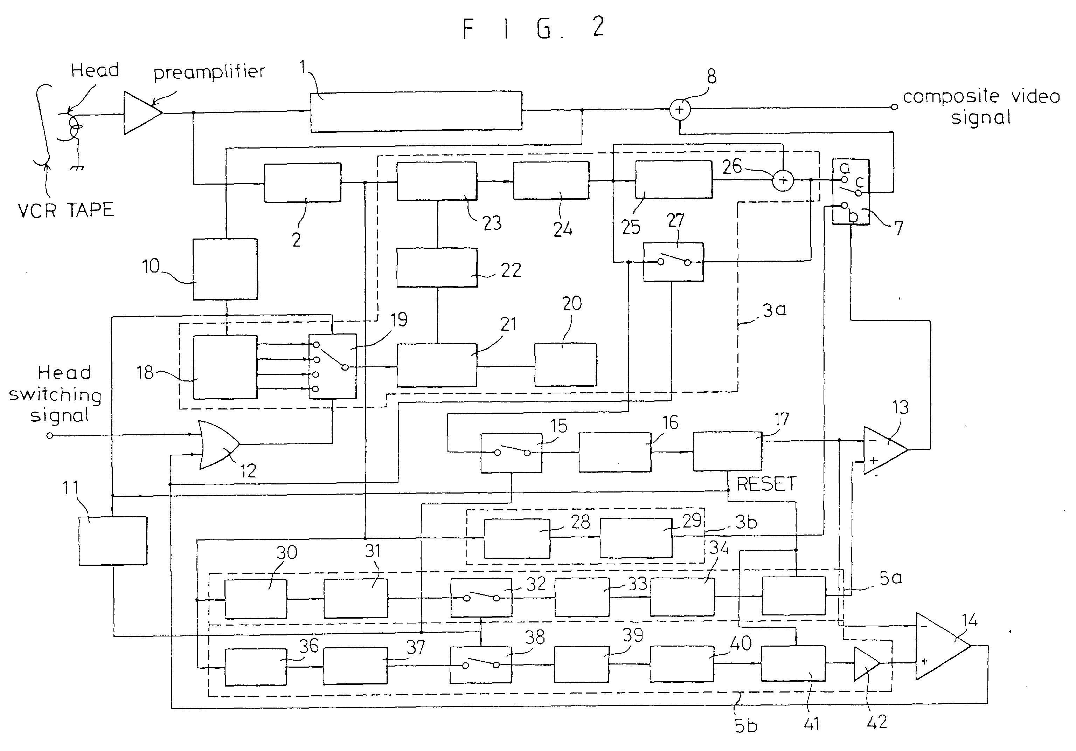

Fig. 2 is a detailed configuration block diagram of Fig. 1 and in Fig. 1 the color signal generating means 3 consists of the first color signal generating part 3a for inputting the output signal of said first filtering part 2 and generating the color signals corresponding to PAL mode and MESECAM mode by the external control signal and the second color signal generating part 3b for inputting the output signal of said first filtering part 2 and generating the color signal corresponding to SECAM mode.

Said first color signal generating part 3a consists of the first multiplier 18 which inputs the synchronizing signal from the control signal generating mean 9 and multiplies the synchronizing signal by the predetermined multiple(Herein, multiply by a multiple of 40), the phase shifter 19 which shifts the phase of the output signal of said first multiplier 18 by the external control signal inputted from the control signal generating means 9, the voltage-controlled oscillator 20 which generates the predetermined frequency signal(Herein, 4.435572 MHz), the sub converter 21 which converts the output signal of said voltage-controlled osillator 20 to the predetermined frequency signal by the output signal of said phase shifter 19 as the control signal, the second filtering part 22 which removes the noise of the output signal of said sub converter 21, the main converter 23 which converts the output of said first filtering part 2 to original color signal of the predetermined frequency by the output signal of the second filtering part 22 as the control signal, the third filtering part 24 which removes the noise including to the output signal of said main converter 23 (Herein, use for 4.43 MHz), the second delay part 25 which delays and outputs the output signal of said third filtering part 24 by the predetermined horizontal interval (Herein, 2 horizontal interval), the second adding part 26 which adds the output signals of said second delay part 25 and said third filtering part 24 and the second switching part 27 which selects one of the output signals of said third filtering part 24 and said second adding part 26 by the signal corresponding to the existance of MESECAM mode among the output signals of said comparing means 6 as the control signal.

Herein, if the external control signal which is the output signal of said comparing means 6 is the signal corresponding to MESECAM mode, the second switching oart 27 outputs the output signal of said third filtering part(24) and if the external control signal is the signal corresponding to PAL mode, it outputs the output signal of said second adding part 26.

Said second color signal generating part 3b consists of the second multiplier 28 multiply the output signal of the first filtering part 2 to the signal of the predetermined multiple (Herein, a multiple of 4) and the forth filtering part 29 which removes the noise including to the output signal of said second multiplier 28 and outputs to the first switching part 27.

Furthermore, in Fig. 1, the comparing signal generating means 5 consists of the first comparing signal generating part 5a which inputs the output signal of said first filtering part 2, amplifies only the predetermined frequency component (Herein, 1.1 MHz) of the inputted signal by the predetermined amplification factor, detects the peak value of the amplified signal by the external signal of said control signal generating means 9 if the color burst signal exists and outputs the peak value as the comparing signal corresponding to SECAM mode and the second comparing signal generating part 5b which inputs the output signal of said first filtering part 2, traps only the predetermined frequency component (Herein, 627 MHz) of the inputted signal, detects the peak value of the trapped signal by the external signal of said control signal generating means 9 if the color burst signal exists and outputs the peak value as the comparing signal corresponding to MESECAM mode.

Said first comparing signal generating part 5a consists of the peaking amplifier 30 which amplifies only the predetermined frequency component (Herein, 1.1 MHz) of the output signal of said first filtering part 2, the third multiplier 31 which multiply the output signal of said peaking amplifier 30 by the predetermined multiple (Herein, a multiple of 4), the forth switching part 32 which passes only the output signal of said third multiplier 31 by the external control signal of said control signal generating means 9 if the color burst signal exists, the fifth filtering part 33 (Herein, use for 4.4 MHz) which removes the noise including to the output signal of said forth switching part 32, the second envelope detecter 34 which inputs the output signal of the fifth filtering part 33 and detects the envelope of said signal and the second peak value holder 35 which holds the peak value of the output signal of the second envelope detecter 34 and applys the peak value to said comparing means 6.

And, said second comparing signal generating part 5b consists of the first trap circuit 36 which inputs the output signal of said first filtering part 2 and traps the signal to the predetermined frequency(Herein, 627 MHz), the forth multiplier 37 which multiplies the output signal of said first trap circuit 36 by the predetermined multiple (Herein, a multiple of 4), the fifth switching part 38 which passes the output signal of said forth multiplier 37 by the external control signal which is delayed the sychronizing signal detected from the synchronizing signal detecting part 10 among the output signals of said control signal generating means 9 if the color burst signal exists, the sixth filtering part 39 (Herein, use for 2.7 MHz) which removes the noise including to the output signal of said fifth switching part 38, the third envelope detecter 40 which detects the envelope of the output signal of said sixth filtering part 39, the third peak value holder 41 which holds and outputs the peak value of the output signal of the third envelope detector 40 and the first amplifier 42 which amplifies the output signal of said third peak value holder 41 by the predetermined amplification factor apply to said comparing means 6.

In Fig. 1, the reference signal generating means 4 consists of the third switching part 15 which inputs the color signal corresponding to MESECAM mode among the output signals of said color signal generating means 3 and outputs the inputted color signal by the external signal of said control signal generating means 9 if the color burst signal exists, the first envelope detector 16 which detects the envelope of the output signal of said third switching part 15 and the first peak value holder 17 which holds the peak value of the output signal of the first envelope detector 16 and outputs to said comparing means 6.

Furthermore, in Fig. 1, the comparing means 6 consists of the first comparing part 13 which applies the mode discriminating signal showing the existence of SECAM mode to said first switching part 7 by comparing the output signal of said reference signal generating means 4 and the comparing signal corresponding to SECAM mode among the output signals of said the comparing signal generating means 5 and the second comparing part 14 which applies the mode discriminating signal showing the existence of MESECAM mode to said color signal generating means 3 as the external control signal by comparing the output signal of said reference signal generating means 4 and the comparing signal corresponding to MESECAM mode among the output signals of said the comparing signal generating means 5.

In Fig. 1, the control signal generating means 9 consist of the synchronizing detecting part 10 which detects the sychronizing signal from the output signal of said luminance signal detecting means 1 and applies said synchronizing signal to said color signal generating means 3, said reference signal generating means 4 and said comparing signal generating means 5 as the external control signal, the first delay part 11 which delays the output signal of said synchronizing signal detecting part 10 for the predetermined time and applies the delayed signal to said reference signal generating means 4 and said comparing signal generating means 5 as the external control signal and OR operating part 12 which inputs the head switching signal and the output signal corresponding to detecting the MESECAM mode among the output signals of said comparing means 6 and accomplishes OR operation of two signal to apply said color signal generating means 3 as the external control signal.

The operation and effect according to aforesaid configuration will be described with reference to the accompanying Fig. 2 through Fig. 4.

First, the signal recorded in VCR tape which is coded through a head is amplified by the predetermined amplification factor through a preamplifier and is applied to the luminance signal detecting means 1 and the first filtering part 2. At this time, the frequency modulated record signal is demodulated and reproduced in the luminance signal detecting means 1 and the reproduced signal is added to the color signal through the first adding part 8 to ouput as a composite video signal.

Furthermore, the luminance signal ouputted from the luminance signal detecting means 1 is inputted to the synchronizing signal detecting part 10 which detects the synchronizing signal. Said synchronizing signal is respectively inputted to the first multiplier 18, the phase shifter 19 and the first delay part 11 and at the same time, the first through third peak value holder 17, 35 and 41 as the reset signal.

And if the color signal extracted through the first filtering part 2 is either PAL mode or MESECAM mode, it is converted to the color signal corresponding to original MESECAM mode through the main converter 23 by the output signl (that is, the component of 5.06 MHz) of the sub converter 21 which is outputted through the second filtering part 22 and then noise of said signal is removed through the third filering 24 (That is, the component of 4.4 MHz) and it is applied to the second delay part 25 (That is, delay by 2H), the second adding part 26, the second switching part 27 and the third switching part 15 respectively.

At this time, if a video signal recorded in VCR tape is PAL mode, because the signal delayed by 2H through the second delay part 25 and undelayed signal are added through the second adding part 26, interference between the adjacent tracks is prevented. At this time, that is, when PAL mode, the synchronizing signal detected through the synchronizing signal detecting part 10 is multiplied by a multiple of 40 through the first multiplier 18 and then the phase of said signal is shifted through the phase shifter 19 by control of the head switching signal and the horizontal synchronizing signal.

Furthermore, if a video signal recorded in VCR tape is SECAM mode, the output signal of first filtering part 2 is multiplied by a multiple of 4 through the second multiplier 28 to convert the color signal corresponding to orignal SECAM mode and then said color signal is applied to the fixed terminal b if the first switching part 7 through the forth filtering part 29. At this time, only the component of 1.1 MHz of said output signal is amplified through the peaking amplifier 30 and is multiplied by a mutiple of 4 through the third multiplier 31 and is applied to the fifth filtering part 33 through the forth switching part 32. At this time, the forth switching part 32 is on when the color burst signal is only exist in the signal outputted from the first delay part 11.

Henceforth, the envelope of the component of 4.4 MHz frequency extracted from the fifth filtering part 33 is detected through the second envelope detecter 34 and is inputted to the second peak value holder 35. At this time, the second peak value holder 35 detects the maximum value of the inputted envelope signal to apply to the noninveting terminal (+) of the first comparing part 13.

Similarily, only the component of 627 KHz in the output of the first filtering part 2 is trapped through the first trap circuit 36 and is multiplied by a multiple of 4 through the forth multiplier 37 and then is applied to the sixth filtering part 39 through the fifth switching part 38 which is on if color burst signal in the output signal of the first delay part 11 exists.

Accordingly, the six filtering part 39 filters only the component of 2.7 MHz in the inputted signal and the filtered signal is outputted through the third envelope detecter 40 as the envelope signal and then the peak value of the envelope signal is detected through the third peak value holder 41. This peak value is amplified by the predetermined level through the first amplifier 42 and then is applied to the noninveting terminal (+) of the second comparing part 14.

On the other hand, because the output signal of the third filtering part 24 is applied to the first envelope detecter 16 through the third switching part 15 which is "on" if the color burst signal is only exist, the envelope of the designated color signal corresponding to MESECAM mode is detected by the first envelope detector 16, which is passed through the third filtering part 24. Henceforth the peak value of the envelope signal is detected through the first peak value holder 17 and then is applied to the inverting terminal(-) of the first and second comparing 13 and 14 respectively.

Accordingly, in the case where the signal recorded in tape which is PAL mode is reproduced, since the output level of the first peak value holder 17 is larger than those of the second peak value holder 35 and the first amplifier 42, the outputs of the the first and second comparing part 13 and 14 are "low" state. Therefore the second switching part 27 is "off" and the movable terminal c of the first switching part 7 is connected to the fixed terminal a and the color signal which is treat as PAL mode is applied to the first adding part 8.

Furthermore, in the case where the signal of tape of MESECAM mode is reproduced, because the output level of the first peak value holder 17 is larger than that of the second peak holder 35 and is smaller than that of the first amplifier 42, the output of the first comparing part 13 maintain the "low" state and accordingly the first switching part 7 maintain the aforesaid state. But because the output of the second comparing part 14 is the "high" state, the second switching part 27 is on and the output signal of the OR operating part 12 is "high" state and then the phase shifter 19 do not operate. Accordingly, the color signal corresponding to MESECAM which is passed through the second delay part 25 (delayed for 2H) is applied to the first adding part 8.

On the other hand, in the case where a video signal recorded in tape is SECAM mode, because the output level of the first peak value holder 17 is smaller than that of the second peak value holder 35, the output of the the first comparing part 13 is the "high" state and the movable terminal c of the first switching part 7 is connected the fixed terminal b.

The color signal corresponding to SECAM mode which is passed to the second multiplier 28 and the forth filtering part 29 is applied to the first adding part 8. Accordingly, a composite video signal which is suited for respective mode can be automatically detected.

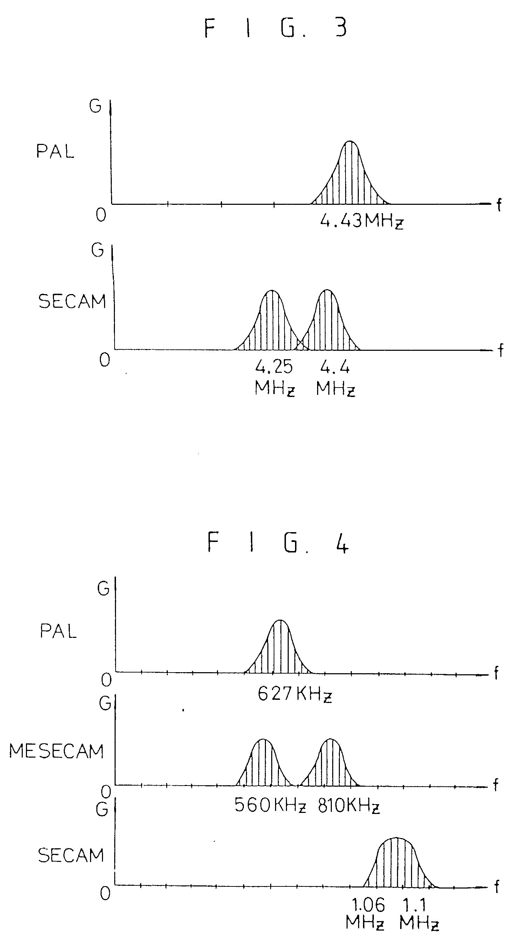

Herein, Fig. 3 shows the frequency spectrum of the color signal corresponding to the respective modes in the case where mode of the color signal recorded in VCR tape is PAL mode and SECAM mode.

Fig. 4 shows the frequency spectrum of the color signal corresponding to the respective modes in the case where mode of the color signal recorded in VCR tape is PAL mode, SECAM mode and MESECAM mode.

According to the present invention as above-mentioned, because composite video signals which are different mutually according to the TV broadcast mode (PAL mode, SECAM mode and MESECAM mode) recorded in VCR tape are outputted, the user can see and hear more clear video signal of various modes.

## Claims

1. An automatic reproducing system for a VCR comprising a luminance signal detecting means (1) for detecting a luminance signal from the signal recorded on VCR tape being inputted through a VCR head; comprising:
a first filtering part (2) for passing only the frequency component corresponding to a color signal from the signal recorded on said VCR tape,
a first adding part (8) for adding the output signals of said luminance signal detecting means (1) and color signals corresponding to PAL mode, MESECAM mode or SECAM to output as a composite video signal;
characterised in that it further comprises
a color signal generating means (3) for inputting the output signal of said first filtering part and generating colour signals corresponding to PAL mode, MESECAM mode and SECAM mode by making use of the inputted signal;
a reference signal generating means (4) for inputting a color signal corresponding to MESECAM mode from said color signal generating means (3) and generating a designated reference signal under control of an external control signal;
a comparison signal generating means (5) for inputting the output signal of said first filtering part (2), generating, under control of said external control signal, respective comparison signals corresponding to MESECAM mode and SECAM mode and outputting said comparison signals;
a comparing means (6) for generating a signal discriminating the mode of a color signal recorded on the VCR tape as the external control signal by respectively comparing the output signal of said reference signal generating means (4) and the output signals of said comparison signal generating means (5);
a first switching part (7) for selecting and outputting one of the color signals corresponding to PAL mode, MESECAM mode and SECAM mode outputted from said color signal generating means (3) under control of an output signal of said comparing means (6);
said first adding part (8) adding the output signals of said luminance signal detecting means (1) and said first switching part to output the composite video signal;
and a control signal generating means (9) for generating the external control signal required by said reference signal generating means (4) and said comparison signal generating means (5) by making use of a synchronizing signal detected from the output signal of said luminance signal detecting means, a head switching signal and an output signal of said comparing means.

2. An automatic reproducing system of a VCR according to claim 1, characterised in that the color signal generating means (3) consists of a first color signal generating part (3a) for inputting the output signal of the first filtering part and generating color signals corresponding to PAL mode or MESECAM mode signal and outputting said color signals;
and a second color signal generating part (3b) for inputting the output signal of the first filtering part, generating a color signal corresponding to SECAM mode and outputting said color signal.

3. An automatic reproducing system of a VCR according to claim 1, characterised in that the comparing signal generating means (5) consists of a first comparing signal generating part (5a) for inputting the output signal of said first filtering part (2), amplifying only a predetermined frequency component of the inputted signal, corresponding to said color signal, by a predetermined amplification factor, detecting the peak value of the amplified signal by the external signal if the color burst signal is present and outputting the peak value as the control signal
corresponding to the SECAM mode; and a second comparing signal generating part (5b) for for inputting the output signal of said first filtering part (2), trapping only the designated frequency component of the inputted signal, detecting the peak value of the trapped signal by the external signal if the color burst signal is present and outputting the peak value as the comparison signal corresponding to MESECAM mode.

4. An automatic reproducing system of a VCR according to claim 1, characterised in that the comparing means (6) consists of a first comparing part for comparing the output signal of said reference signal generating means and the comparing signal corresponding to SECAM mode among the output signals of said comparing signal generating means and applying the signal showing the existence of SECAM mode to said first switching part (7);
and a second comparing part (14) for comparing the output signal of said reference signal generating means (4) and the comparing signal corresponding to MESECAM mode among the output signals of said comparing signal generating means and applying the signal showing the existence of MESECAM mode to said color signal generating means (3) as the MESECAM mode select signal.

5. An automatic reproducing system of a VCR according to claim 1, characterised in that the control signal generating means (9) receives a synchronizing signal from the output signal of said luminance signal detecting means (1) and is adapted for applying said synchronizing signal to said color signal generating means (3), said reference signal generating means (4) and said comparing signal generating means (5) as the external control signal; and further comprises
a first delay part (11) for delaying said synchronizing signal by a predetermined time and applying the delayed signal to said reference signal generating means (5) as the external control signal;
and an OR operating part (12) for inputting a head switching signal and a signal corresponding to detecting the MESECAM mode among the output signals of said comparing means and accomplishing OR operation on the two signals input and for outputting the result of the OR operation to apply to said color signal generating means (3) as the external control signal.

6. An automatic reproducing system of a VCR according to claim 1, characterised in that the reference signal generating means (4) consists of a third switching part for inputting the color signal corresponding to MESECAM mode among the output signals of said color signal generating means under control of the external control signal of the control signal generating means (9) if the color burst signal is present;
a first envelope detector (34) for detecting the envelope of the output signal of said third switching part;
and a first peak value holder for holding the peak value of each output signal of the first envelope detector (34) and outputting the peak value for input to said comparing means (6).

7. An automatic reproducing system of a VCR according to claim 2, characterised in that the first color signal generating part (3a) consists of a first frequency multiplier (18) for inputting a synchronizing signal from the control signal generating means (9) and multiplying said synchronizing signal by a predetermined multiple;
a phase shifter (19) for shifting the phase of the output signal of said first multiplier (18) under control of the external control signal of said control signal generating means (9) ;
a voltage-controlled oscillator (20) for generating a designated frequency signal;
a sub converter (21) for converting the output signal of said voltage-controlled oscillator to a predetermined frequency signal by the output signal of said phase shifter (19) as the control signal;
a second filtering part (22) for removing the noise included in the output signal of said sub converter (21);
a main converter (23) for shifting the frequency of the output signal of said first filtering part (2) by an amount equal to the frequency of the predetermined frequency signal output by said second filtering part (22) as the control signal;
a third filtering part (24) for removing the noise included in the output signal of said main
converter (23); a second delay part (25) for delaying the output signal of said third filtering part (24) by a predetermined horizontal time
interval and outputting a delayed signal; an adding part (26) for adding the output signals of said second delay part (25) and said third filtering part (24);
and a second switching part (27) for selecting either the output signal of said third filtering part or the output signal of said second adding part (26) under control of the external control signal corresponding to an output signal of said comparing means (14), said second switching part outputting the output signal of said third filtering part (24), if the external control signal is corresponding to MESECAM mode and outputting the output signal of said second adding part (26) if is corresponding to PAL mode.

8. An automatic reproducing system of a VCR according to claim 2, characterised in that the second color signal generating part consists of a second frequency multiplier (28) for multiplying the output signal of said first filtering part (2) by a predetermined multiple;
and a fourth filtering part (29) for removing the noise included in the output signal of said second multiplier (28) and outputting a noise-filtered signal to said first switching part.

9. An automatic reproducing system of a VCR according to claim 3, characterised in that the first comparing signal generating part consists of a peaking amplifier (30) for amplifying the output signal of said first filtering part (2);
a third multiplier (31) for multiplying the output signal of said peaking amplifier (30) by a predetermined multiple;
a fourth switching part (32) for passing the output signal of said third multiplier (31) under control of the external control signal of said control signal generating means (9) if the color burst signal exists;
a fifth filtering part (33) for removing the noise included in the output signal of said fourth switching part (29);
a second envelope detector (34) for inputting the output signal of said fifth filtering part and detecting the envelope of said signal;
and a second peak value holder (54) for holding the peak value of the output signal of the second envelope detector (34) and applying the peak value to said comparing means (6).

10. An automatic reproducing system of a VCR according to claim 3, characterised in that the second comparing signal generating part consists of a first trap circuit (36) for inputting the output signal of said first filtering part (2) and trapping the inputted signal at a predetermined frequency;
a fourth multiplier (37) for multiplying the output signal of said first trap circuit by a predetermined multiple;
a fifth switching part (38) for passing the output signal of said fourth multiplier (371) under control of the external control signal which corresponds to a delayed said synchronizing signal present among the output signals of said control signal generating means (9) if the color burst signal exists;
a sixth filtering part (39) for removing the noise included in the output signal of said fifth switching part (38);
a third envelope detector (40) for detecting the envelope of the output signal of said sixth filtering part (39);
a third peak value holder (41) for holding the peak value of the output signal of the third envelope detector (40) and outputting the peak value;
and a first amplifier (42) for amplifying the output signal of said third peak value holder (41) by a predetermined amplification factor to apply to said comparing means.

## Patentansprüche

1. Ein automatisches Wiedergabesystem für einen Videokassettenrecorder (VCR) mit einer Luminanzsignal-Detektionsvorrichtung (1) zum Detektieren eines Luminanzsignals von dem auf Videoband aufgenommenen Signal, das über einen VCR-Kopf eingegeben wird; umfassen:
ein erstes Filterteil (2), um nur die Frequenzkomponente passieren zu lassen, die mit einem Farbsignal von dem auf VCR-Band aufgenommenen Signal korrespondiert,
ein erstes Additionsteil (8) zum Addieren der Ausgangssignale der besagten Luminanzsignal-Detektionsvorrichtung (1) und dem PAL-Modus, MESECAM-Modus oder SECAM entsprechenden Farbsignalen, um ein zusammengesetztes Videosignal auszugeben;
**dadurch gekennzeichnet,** daß es weiterhin besitzt
eine Farbsignal-Erzeugungsvorrichtung (3) zur Eingabe des Ausgangssignals des ersten Filterteils und zur Erzeugung von Farbsignalen, die mit PAL-Modus, MESECAM-Modus und SECAM-Modus korrespondieren, indem von dem eingegebenen Signal Gebrauch gemacht wird;
eine Referenzsignal-Erzeugungsvorrichtung (4) zur Eingabe eines Farbsignals, das zum MESECAM-Modus korrespondiert, von der Farbsignal-Erzeugungsvorrichtung (3) und Erzeugen eines bestimmten Referenzsignals unter Kontrolle eines externen Kontrollsignals;
eine Vergleichssignal-Erzeugungsvorrichtung (5) zur Eingabe des Ausgangssignals des ersten Filterteils (2), welche jeweils unter Kontrolle des besagten externen Kontrollsignals zum MESECAM-Modus und SECAM-Modus korrespondierende Vergleichssignale erzeugt und zur Ausgabe dieser Vergleichssignale;
eine Vergleichervorrichtung (6) zur Erzeugung eines Signals, das den Modus eines auf dem VCR-Band aufgenommenen Farbsignals unterscheidet, als das externe Kontrollsignal durch jeweiliges Vergleichen des Ausgangssignals der Referenzsignal-Erzeugungsvorrichtung (4) und der Ausgangssignale der Vergleichssignal-Erzeugungsvorrichtung (5);
ein erstes Schalterteil (7) zur Auswahl und Ausgabe eines der Farbsignale, welche mit PAL-Modus, MESECAM-Modus und SECAM-Modus korrespondieren, welche von der Farbsignal-Erzeugungsvorrichtung (3) unter Kontrolle eines Ausgangssignals der Vergleichervorrichtung (6) ausgegeben werden;
wobei das erste Additionsteil (8) die Ausgangssignale der Luminanzsignal-Detektionsvorrichtung (1) und des ersten Schalterteils addiert, um das zusammengesetzte Videosignal auszugeben;
und eine Kontrollsignal-Erzeugungsvorrichtung (9) zur Erzeugung des externen Kontrollsignals, das durch die Referenzsignal-Erzeugungsvorrichtung (4) und die Vergleichssignal-Erzeugungsvorrichtung (5) benötigt wird, indem ein synchronisierendes Signal, das vom Ausgangssignal der Luminanz-Erzeugungsvorrichtung detektiert wird, ein Kopf-Schaltsignal und ein Ausgangssignal der Vergleichervorrichtung benutzt wird.

2. Ein automatisches Wiedergabesystem eines VCR nach Anspruch 1, **dadurch gekennzeichnet,** daß die Farbsignal-Erzeugungsvorrichtung (3) besteht aus einem ersten Farbsignal-Erzeugungsteil (3a) zur Eingabe des Ausgangssignals des ersten Filterteils und zur Erzeugung von Farbsignalen, welche zum PAL-Modus- oder MESECAM-Modus-Signal korrespondieren, und zur Ausgabe dieser Farbsignale;
und einem zweiten Farbsignal-Erzeugungsteil (3b) zur Eingabe des Ausgangssignals des ersten Filterteils zur Erzeugung eines Farbsignals, welches zum SECAM-Modus korrespondiert, und zur Ausgabe des besagten Farbsignals.

3. Ein automatisches Wiedergabesystem für einen VCR nach Anspruch 1, **dadurch gekennzeichnet,** daß die Vergleichssignal-Erzeugungsvorrichtung (5) besteht aus einem ersten Vergleichssignal-Erzeugungsteil (5a) zur Eingabe des Ausgangssignals des ersten Filterteils (2), Verstärkung nur einer vorgegebenen Frequenzkomponente des eingegebenen Signals, welches zu dem Farbsignal korrespondiert, um einen vorgegebenen Verstärkungsfaktor, Detektieren des Spitzenwertes des verstärkten Signals durch das externe Signal, wenn das Farb-Signalbündel vorhanden ist, und Ausgeben des Spitzenwertes als das Kontrollsignal korrespondierend zum SECAM-Modus;
und einem zweiten Vergleichssignal-Erzeugungsteil (5b) zur Eingabe des Ausgangssignals des ersten Filterteils (2), Erfassen nur der bestimmten Frequenzkomponente des eingegebenen Signals, Detektieren des Spitzenwertes des erfaßten Signals durch das externe Signal, wenn das Farb-Signalbündel vorhanden ist, und Ausgeben des Peak-Wertes als das Vergleichssignal korrespondierend zum MESECAM-Modus.

4. Ein automatisches Wiedergabesystem für einen VCR nach Anspruch 1, **dadurch gekennzeichnet,** daß die Vergleichervorrichtung (6) besteht aus einem ersten Vergleicherteil zum Vergleich des Ausgangssignals der Referenzsignal-Erzeugungsvorrichtung und des Vergleichssignals, welches unter den Ausgangssignalen der Vergleichssignal-Erzeugungsvorrichtung zum SECAM-Modus korrespondiert, und Anwenden des Signals, was das Vorhandensein des SECAM-Modus anzeigt, auf das erste Schalterteil (7);
und einem zweiten Vergleicherteil (14) zum Vergleich des Ausgangssignals der Referenzsignal-Erzeugungsvorrichtung (4) und des Vergleichssignals, welches unter den Ausgangssignalen der Vergleichssignal-Erzeugungsvorrichtung mit dem MESECAM-Modus korrespondiert, und Anwenden dieses Signals, das das Vorhandensein des MESECAM-Modus anzeigt, auf die Farbsignal-Erzeugungsvorrichtung (3) als das MESECAM-Modus-Auswahlsignal.

5. Ein automatisches Wiedergabesystem eines VCR nach Anspruch 1, dadurch gekennzeichnet, daß die Kontrollsignal-Erzeugungsvorrichtung (9) ein Synchronisierungssignal vom Ausgangssignal der Luminanzsignal-Detektionsvorrichtung (1) empfängt und angepaßt ist zur Anwendung des Synchronisierungssignals auf die Farbsignal-Erzeugungsvorrichtung (3), die Referenzsignal-Erzeugungivorrichtung (4) und die Vergleichssignal-Erzeugungsvorrichtung (5) als das externe Kontrollsignal;
und weiterhin umfaßt ein erstes Verzögerungsteil (11) zur Verzögerung des Synchronisierungssignals um eine vorgegebene Zeit und Anwenden des verzögerten Signals auf die Referenzsignal-Erzeugungsvorrichtung (5) als das externe Kontrollsignal;
und ein OR-Schalterteil (12) zur Eingabe eines Kopfschaltsignals und eines Signals, das zum Detektieren des MESECAM-Modus unter den Ausgangssignalen der Vergleichervorrichtung korrespondiert, und Ausführen einer ODER-Operation auf den beiden eingegebenen Signalen und zur Ausgabe des Ergebnisses der ODER-Operation, um es auf die Farbsignal-Erzeugungsvorrichtung (3) als das externe Kontrollsignal anzuwenden.

6. Ein automatisches Wiedergabesystem für einen VCR nach Anspruch 1, dadurch gekennzeichnet, daß die Referenzsignal-Erzeugungsvorrichtung (4) besteht aus einem dritten Schalterteil zur Eingabe des Farbsignals, das unter den Ausgangssignalen der Farbsignal-Erzeugungsvorrichtung zum MESECAM-Modus korrespondiert, unter Kontrolle des externen Kontrollsignals der Kontrollsignal-Erzeugungsvorrichtung (9), wenn das Farb-Signalbündel vorhanden ist;
einem ersten Informationsbeginn-und-ende-Detektor (34) zur Detektion des Beginns und des Endes des Ausgangssignals des dritten Schalterteils;
und einem ersten Spitzenwertspeicher zum Halten des Peak-Wertes jedes Ausgangssignals des ersten Informationsbeginn-und-ende-Detektors (34) und Ausgeben des Spitzenwertes zur Eingabe in die Vergleichervorrichtung (6).

7. Ein automatisches Wiedergabesystem für eipen VCR entsprechend Anspruch 2, dadurch gekennzeichnet, daß das erste Farbsignal-Erzeugungsteil (3a) besteht aus einem ersten Frequenzmultiplizierer (18) zum Eingeben eines Synchronisierungssignals von der Kontrollsignal-Erzeugungsvorrichtung (9) und Multiplizieren des Synchronisierungssignals mit einem vorgegebenen Multiplikator;
einem Phasenschieber (19) zum Verschieben der Phase des Ausgangssignals des ersten Multiplizierers (18) unter Kontrolle des externen Kontrollsignals der Kontrollsignal-Erzeugungsvorrichtung (9);
einem spannungskontrollierten Oszillator (20) zur Erzeugung eines bestimmten Frequenzsignals;
einem Unter-Frequenzwandler (21) zum Umwandeln des Ausgangssignals des spannungskontrollierten Oszillators in ein vorgegebenes Frequenzsignal durch das Ausgangssignal des Phasenverschiebers (19) als das Kontrollsignal;
einem zweiten Filterteil (22) zum Entfernen des Rauschens, welches im Ausgangssignal des Unter-Frequenzwandlers (21) enthalten ist;
einem Haupt-Frequenzwandler (23) zum Verschieben der Frequenz des Ausgangssignals des ersten Filterteils (2) um einen Betrag, welcher gleich dem vorgegebenen Frequenzsignal ist, welches vom zweiten Filterteil (22) als Kontrollsignal ausgegeben wird;
einem dritten Filterteil (24) zum Entfernen des Rauschens, welches im Ausgangssignal des Hauptkonverters (23) enthalten ist;
einem zweiten Verzögerungsteil (25) zum Verzögern des Ausgangssignals des dritten Filterteils (24) durch ein vorgegebenes horizontales Zeitintervall und Ausgeben eines verzögerten Signals;
einem Additionsteil (26) zum Addieren der Ausgangssignale des zweiten Verzögerungsteils (25) und des dritten Filterteils (24);
und einem zweiten Schalterteil (27) zur Auswahl entweder des Ausgangssignals des dritten Filterteils oder des Ausgangssignals des zweiten Additionsteils (26) unter Kontrolle des externen Kontrollsignals, welches korrespondiert mit einem Ausgangssignal der Vergleichervorrichtung (14), wobei das zweite Schalterteil das Ausgangssignal des dritten Filterteils (24) ausgibt, wenn das externe Kontrollsignal mit dem MESECAM-Modus korrespondiert, und Ausgabe des Ausgangssignals des zweiten Additionsteils (26), wenn es mit dem PAL-Modus korrespondiert.

8. Ein automatisches Wiedergabegerät für einen VCR nach Anspruch 2, **dadurch gekennzeichnet,** daß der zweite Farbsignal-Erzeugungsteil besteht aus einem zweiten Frequenzmultiplizierer (28) zum Multiplizieren des Ausgangssignals des ersten Filterteils (2) mit einem vorgegebenen Multiplikator;
und einem vierten Filterteil (29) zur Entfernung des Rauschens, welches in dem Ausgangssignal des zweiten Multiplizierers (28) enthalten ist, und Ausgabe eines rauschgefilterten Signals an das erste Schalterteil.

9. Automatische Wiedergabevorrichtung für ein VCR nach Anspruch 3, **dadurch gekennzeichnet,** daß das erste Vergleichssignal-Erzeugungsteil besteht aus einem Spitzenwert-Verstärker (30) zur Verstärkung des Ausgangssignals des ersten Filterteils (2);
einem dritten Multiplizierer (31) zum Multiplizieren des Ausgangssignals des Spitzenwert-Verstärkers (30), um einen vorgebenen Multiplikator;
einem vierten Schalterteil (32) zum Dur des Ausgangssignals des dritten Mulitplizierers (31) unter Kontrolle des externen Kontrollsignals der Kontrollsignal-Erzeugungsvorrichtung (9), wenn das Farb-Signalbündel vorhanden ist;
einem fünften Filterteil (33) zum Entfernen des Rauschens, welches in dem Ausgangssignal des vierten Schalterteils (29) enthalten ist;
einem zweiten Informationsbeginn-und ende-Detektor (34) zum Eingeben des Ausgangssignals des fünften Filterteils und des Anfangs und des Endes des Signals;
und einem zweiten Spitzenwertspeicher (54) zum Halten des Spitzenwertes des Ausgangssignals des zweiten Informationsbeginn-und-ende-Detektors (34) und Anwenden des Spitzenwertes auf die Vergleichsvorrichtung (6).

10. Automatisches Wiedergabesystem für ein VCR nach Anspruch 3, **dadurch gekennzeichnet,** daß das zweite Vergleichssignal-Erzeugungsteil besteht aus einem ersten Erfassungskreis (36) zur Eingabe des Ausgangssignals des ersten Filterteils (2) und Erfassen des eingegebenen Signals bei einer vorgegebenen Frequenz;
einen vierten Multiplizierer (37) zum Multiplizieren des Ausgangssignals des ersten Erfassungskreises um einen vorgegebenen Multiplikator;
einem fünften Schalterteil (38) zum Durchlassen des Ausgangssignals des vierten Multiplizierers (37) unter Kontrolle des externen Kontrollsignals, welches korrespondiert zu dem verzögerten Synchronisierungssignal, welches unter den Ausgangssignalen der Kontrollsignals-Erzeugungsvorrichtung (9) vorhanden ist, wenn das Farb-Signalbündel vorhanden ist;
einem sechsten Filterteil (39) zum Entfernen des Rauschens, welches in dem Ausgangssignal des fünften Schalterteils (38) beinhaltet ist;
einem dritten Informationsbeginn-und-ende-Detektor (40) zum Detektieren des Anfangs und des Endes des Ausgangssignals des sechsten Filterteils (39);
einem dritten Spitzenwerthalter (41) zum Halten des Spitzenwertes des Ausgangssignals des dritten Informationsbeginn-und-ende-Detektors (40) und Ausgeben des Spitzenwertes;
und einem ersten Verstärker (42) zum Verstärken des Ausgangssignals des dritten Spitzenwertspeichers (41) um einen vorgegebenen Verstärkungsfaktor, zum Anwenden auf die Vergleichervorrichtung.

## Revendications

1. Système de reproduction automatique pour magnétoscope comportant des moyens (1) de détection de signal de luminance pour détecter un signal de luminance provenant du signal enregistré sur une bande de magnétoscope, entré par une tête de magnétoscope, comportant :
une première partie filtrante (2) destinée à laisser passer uniquement la composante de fréquence correspondant à un signal de couleur provenant du signal enregistré sur ladite bande de magnétoscope,
une première partie d'addition (8) destinée à ajouter les signaux émis par lesdits moyens (1) de détection de signal de luminance et des signaux de couleur correspondant au mode PAL, au mode MESECAM ou au mode SECAM pour les émettre sous forme d'un signal vidéo composite,
caractérisé en ce qu'il comporte de plus
des moyens (3) de production de signal de couleur destinés à recevoir le signal de sortie de ladite première partie filtrante et produire des signaux de couleur correspondant au mode PAL, au mode MESECAM et au mode SECAM en utilisant le signal reçu ;
des moyens (4) de production de signal de référence pour recevoir un signal de couleur correspondant au mode MESECAM provenant desdits moyens (3) de production de signal de couleur et produire un signal de référence désigné, sous la commande d'un signal de commande externe,
des moyens (5) de production de signal de comparaison pour recevoir le signal de sortie de ladite première partie filtrante (2), produire, sous la commande dudit signal de commande externe, des signaux respectifs de comparaison correspondant au mode MESECAM et au mode SECAM et émettre lesdits signaux de comparaison,
des moyens (6) de comparaison pour produire un signal déterminant le mode d'un signal de couleur enregistré sur la bande d'un magnétoscope sous la forme du signal de commande externe en comparant respectivement le signal de sortie desdits moyens (4) de production de signal de référence et les signaux de sortie desdits moyens (5) de production de signal de comparaison,
une première partie de commutation (7) pour sélectionner et émettre un des signaux de couleur correspondant au mode PAL, au mode MESECAM et au mode SECAM émis par lesdits moyens (3) de production de signal de couleur sous la commande d'un signal de sortie desdits moyens (6) de comparaison, ladite première partie d'addition (8) ajoutant les signaux de sortie desdits moyens (1) de détection de signal de luminance et de ladite première partie de commutation pour émettre le signal vidéo composite,
et des moyens (9) de production de signal de commande pour produire le signal de commande externe requis par lesdits moyens (4) de production de signal de référence et lesdits moyens (5) de production de signal de comparaison en utilisant un signal de synchronisation détecté à partir du signal de sortie desdits moyens de détection de signal de luminance, d'un signal de commutation de tête et d'un signal de sortie desdits moyens de comparaison.

2. Système de reproduction automatique d'un magnétoscope selon la revendication 1, caractérisé en ce que les moyens (3) de production de signal de couleur sont constitués d'une première partie (3a) de production de signal de couleur destinée à recevoir le signal de sortie de la première partie filtrante et produire des signaux de couleur correspondant au signal de mode PAL ou de mode MESECAM et émettre lesdits signaux de couleur,
et une seconde partie (3b) de production de signal de couleur pour recevoir le signal de sortie de la première partie filtrante, produire un signal de couleur correspondant au mode SECAM et émettre ledit signal de couleur.

3. Système de reproduction automatique d'un magnétoscope selon la revendication 1, caractérisé en ce que les moyens (5) de production de signal de comparaison sont constitués d'une première partie (5a) de production de signal de comparaison pour recevoir le signal de sortie de ladite première partie filtrante (2), amplifier uniquement une composante de fréquence prédéterminée du signal reçu, correspopdant audit signal de couleur, par un facteur d'amplification prédéterminé, détecter la valeur de crête du signal amplifié par le signal externe si le signal de salve de couleur est présent et émettre la valeur de crête en tant que signal de commande correspondant au mode SECAM, et une seconde partie (5b) de production de signal de comparaison pour recevoir le signal de sortie de ladite première partie filtrante (2), piéger uniquement la composante de fréquence désignée du signal reçu, détecter la valeur de crête du signal piégé par le signal externe si le signal de salve de couleur est présent et émettre la valeur de crête en tant que signal de comparaison correspondant au mode MESECAM.

4. Système de reproduction automatique d'un magnétoscope selon la revendication 1, caractérisé en ce que les moyens (6) de comparaison sont constitués d'une première partie de comparaison pour comparer le signal de sortie desdits moyens de production de signal de référence et le signal de comparaison correspondant au mode SECAM parmi les signaux de sortie desdits moyens de production de signal de comparaison et appliquer le signal indiquant l'existence du mode SECAM à ladite première partie de commutation (7),
et une seconde partie de comparaison (14) pour comparer le signal de sortie desdits moyens (4) de production de signal de référence et le signal de comparaison correspondant au mode MESECAM parmi les signaux de sortie desdits moyens de production de signal de comparaison et appliquer le signal indiquant l'existence du mode MESECAM auxdits moyens (3) de production de signal de couleur en tant que signal de sélection de mode MESECAM.

5. Système de reproduction automatique d'un magnétoscope selon la revendication 1, caractérisé en ce que les moyens (9) de production de signal de commande reçoivent un signal de synchronisation provenant du signal de sortie desdits moyens (1) de détection de signal de luminance et sont adaptés pour appliquer ledit signal de synchronisation auxdits moyens (3) de production de signal de couleur, auxdits moyens (4) de production de signal de référence et auxdits moyens (5) de production de signal de comparaison en tant que signal de commande externe et en ce qu'il comporte de plus
une première partie de retard (11) pour retarder ledit signal de synchronisation d'un temps prédéterminé et appliquer le signal retardé auxdits moyens (4) de production de signal de référence en tant que signal de commande externe,
et une partie (12) d'opération OU pour recevoir un signal de commutation de tête et un signal correspondant pour détecter le mode MESECAM parmi les signaux de sortie desdits moyens de comparaison et réaliser une opération OU sur les deux signaux reçus et pour émettre le résultat de l'opération OU pour l'appliquer auxdits moyens (3) de production de signal de couleur en tant que signal de commande externe.

6. Système de reproduction automatique d'un magnétoscope selon la revendication 1, caractérisé en ce que les moyens (4) de production de signal de référence sont constitués d'une troisième partie de commutation pour recevoir le signal de couleur correspondant au mode MESECAM parmi les signaux de sortie desdits moyens de production de signal de couleur sous la commande du signal de commande externe des moyens (9) de production de signal de couleur si le signal de salve de couleur est présent,
un premier détecteur d'enveloppe (34) pour détecter l'enveloppe du signal de sortie de ladite troisième partie de commutation,
et un premier support de valeur de crête pour supporter la valeur de crête de chaque signal de sortie du premier détecteur d'enveloppe (34) et émettre la valeur de crête pour l'introduire dans lesdits moyens (6) de comparaison.

7. Système de reproduction automatique d'un magnétoscope selon la revendication 2, caractérisé en ce que la première partie (3a) de production de signal de couleur est constituée d'un premier multiplicateur de fréquence (18) destiné à recevoir un signal de synchronisation provenant des moyens (9) de production de signal de commande et à multiplier ledit signal de synchronisation par un multiple prédéterminé,
un déphaseur (19) pour décaler la phase du signal de sortie dudit premier multiplicateur (18) sous la commande du signal de commande externe desdits moyens (9) de production de signal de commande,
un oscillateur (20) commandé en tension pour produire un signal de fréquence désignée,
un sous-convertisseur (21) pour convertir le signal de sortie dudit oscillateur commandé en tension en signal de fréquence prédéterminée par le signal de sortie dudit déphaseur (19) en tant que signal de commande,
une deuxième partie filtrante (22) pour supprimer le bruit inclus dans le signal de sortie dudit sous-convertisseur (21),
un convertisseur principal (23) pour décaler la fréquence du signal de sortie de ladite première partie filtrante (2) d'une quantité égale à la fréquence du signal de fréquence prédéterminée émis par ladite deuxième partie filtrante (22) en tant que signal de commande,
une troisième partie filtrante (24) pour enlever le bruit inclus dans le signal de sortie dudit convertisseur principal (23), une seconde partie de retard (25) pour retarder le signal de sortie de ladite troisième partie filtrante (24) d'un intervalle de temps horizontal prédéterminé et émettre un signal retardé, une partie d'addition (26) pour ajouter des signaux de sortie de ladite seconde partie de retard (25) et de ladite troisième partie filtrante (24),
et une deuxième partie de commutation (27) pour sélectionner l'un ou l'autre parmi le signal de sortie de ladite troisième partie filtrante ou le signal de sortie de ladite seconde partie d'addition (26) sous la commande du signal de commande externe correspondant à un signal de sortie desdits moyens de comparaison (14), ladite deuxième partie de commutation émettant le signal de sortie de ladite troisième partie filtrante (24), si le signal de commande externe correspond au mode MESECAM et émettre le signal de sortie de ladite seconde partie d'addition (26) s'il correspond au mode PAL.

8. Système de reproduction automatique d'un magnétoscope selon la revendication 2, caractérisé en ce que la seconde partie de production de signal de couleur est constituée d'un deuxième multiplicateur de fréquence (28) pour multiplier le signal de sortie de ladite première partie filtrante (2) par un multiple prédéterminé, et une quatrième partie filtrante (29) pour supprimer le bruit inclus dans le signal de sortie dudit deuxième multiplicateur (28) et émettre un signal filtré en bruit vers ladite première partie de commutation.

9. Système de reproduction automatique d'un magnétoscope selon la revendication 3, caractérisé en ce que la première partie de production de signal de comparaison est constituée d'un amplificateur de fréquence élevée (30) pour amplifier le signal de sortie de ladite première partie filtrante (2),
un troisième multiplicateur (31) pour multiplier le signal de sortie dudit amplificateur de fréquence élevée (30) par un multiple prédéterminé,
une quatrième partie de commutation pour laisser passer le signal de sortie dudit troisième multiplicateur (31) sous la commande du signal de commande externe desdits moyens (9) de production de signal de commande si le signal de salve de couleur existe,
une cinquième partie filtrante (33) pour supprimer le bruit inclus dans le signal de sortie de ladite quatrième partie de commutation (29),
un deuxième détecteur d'enveloppe (34) pour recevoir le signal de sortie de ladite cinquième partie filtrante et détecter l'enveloppe dudit signal,
et un deuxième support de valeur de crête (54) pour supporter la valeur de crête du signal de sortie du deuxième détecteur d'enveloppe (34) et appliquer la valeur de crête auxdits moyens (6) de comparaison.

10. Système de reproduction automatique d'un magnétoscope selon la revendication 3, caractérisé en ce que la seconde partie de production de signal de comparaison est constituée d'un premier circuit bouchon (36) destiné à recevoir le signal de sortie de ladite première partie filtrante (2) et piéger le signal reçu à une fréquence prédéterminée,
un quatrième multiplicateur (37) pour multiplier le signal de sortie dudit premier circuit bouchon par un multiple prédéterminé,
une cinquième partie de commutation (38) pour laisser passer le signal de sortie dudit quatrième multiplicateur (371) sous la commande du signal de commande externe qui correspond audit signal de synchronisation retardé présent parmi les signaux de sortie desdits moyens (9) de production de signal de commande si le signal de salve de couleur existe,
une sixième partie filtrante (39) pour supprimer le bruit inclus dans le signal de sortie de ladite cinquième partie de commutation (38),
un troisième détecteur d'enveloppe (40) pour détecter l'enveloppe du signal de sortie de ladite sixième partie filtrante (39),
un troisième support de valeur de crête (41) pour supporter la valeur de crête du signal de sortie du troisième détecteur d'enveloppe (40) et émettre la valeur de crête,
et un premier amplificateur (42) pour amplifier le signal de sortie dudit troisième support de valeur de crête (41) par un facteur d'amplification prédéterminé pour application auxdits moyens de comparaison.
